# EUROPEAN PATENT APPLICATION

(11) **EP 3 747 630 A1**
(43) Date of publication of application: **09.12.2020**
(21) Application number: 19747055.2
(22) Date of filing: 29.01.2019
(51) Int. Cl.: B29C 64/118, B29C 64/259, B33Y 30/00, B33Y 70/00

(54) **MATERIAL FOR THREE-DIMENSIONAL MODELING, FILAMENT FOR THREE-DIMENSIONAL MODELING, ROLL OF SAID FILAMENT, AND CARTRIDGE FOR THREE-DIMENSIONAL PRINTER**

(30) Priority: 02.02.2018 JP 2018017466
(71) Applicant: Mitsubishi Chemical Corporation, Chiyoda-ku Tokyo 100-8251 (JP)
(72) Inventor: HIRANO, Akiko, Tokyo 100-8251 (JP)
(74) Representative: Vossius & Partner Patentanwälte Rechtsanwälte mbB
(86) International application number: PCT/JP2019/002945
(87) International publication number: WO 2019/151234

(57) **Abstract**

Provided is a three-dimensional modeling material containing a styrene-based resin and used for a fused deposition modeling three-dimensional printer. The three-dimensional modeling material has at least one glass transition temperature (Tg) in the range of 50°C or higher and lower than 100°C.

## Description

### Technical Field

The present invention relates to a three-dimensional modeling material and a three-dimensional modeling filament that are readily formable using a fused deposition modeling three-dimensional printer and to a three-dimensional modeling method that uses the three-dimensional modeling material or filament. The present invention also relates to a roll of the filament and to a cartridge for a three-dimensional printer.

### Background Art

Three-dimensional printers of various additive manufacturing types (such as the binder jetting type, the fused deposition modeling type, and the vat photopolymerization type) are commercially available.

In the fused deposition modeling method (hereinafter may be referred to as the FDM method), a raw material in the form of a filament formed of a thermoplastic resin is first inserted into an extrusion head and continuously extruded from a nozzle portion provided in the extrusion head onto an X-Y plane substrate in a chamber while being heat-fused. The extruded resin is deposited on a previously deposited resin stack and fused thereto. As the extruded resin is cooled, it is integrated with the previously deposited resin stack and solidified. Since the FDM method is a simple system as described above, the use of the FDM method is being widespread.

Generally, in a material extrusion three-dimensional printer typified by an FDM three-dimensional printer, the extrusion step is repeated while the position of the nozzle relative to the substrate is raised in the Z-axis direction perpendicular to the X-Y plane, and a three-dimensional object similar to a CAD model is thereby built.

Generally, a thermoplastic resin such as a polylactic acid (hereinafter may be referred to as a "PLA resin") or an acrylonitrile-butadiene-styrene-based resin (hereinafter may be referred to as an "ABS resin") is preferably used as a raw material of the modeling material for the fused deposition modeling method from the viewpoint of workability and flowability (PTL 1). In particular, the ABS resin is excellent in heat resistance, strength of a shaped article, post-processing workability such as polishing or drilling, etc. and is therefore widely used for industrial applications including modeling of products and modeling of manufacturing tools.

Problems with the ABS resin are that, since the warpage of the shaped ABS resin during forming is large, the resin may peel off a modeling table (substrate) during modeling and it is difficult to obtain a target-shaped object with high dimensional accuracy.

In PTL 2, the temperature of a modeling area (modeling atmosphere temperature) is controlled precisely to prevent warpage.

PTL 1: Japanese Unexamined Patent Application Publication No. 2008-194968
PTL 2: Japanese Unexamined Patent Application Publication (Translation of PCT Application) No. 2002-500584

### Summary of Invention

A problem with the method described in PTL 2 in which the temperature of the modeling area is precisely controlled is that the three-dimensional printer is large and expensive.

A three-dimensional printer in which the temperature of the modeling area cannot be controlled is inexpensive, but the warpage problem occurs.

An object of the present invention is to provide a three-dimensional modeling material and a three-dimensional modeling filament that have good heat resistance, can form a shaped article having high strength, have good workability, are prevented from warping during modeling without precise control of the temperature of the modeling area, and can be preferably used for industrial applications.

The present inventor has found that the above object can be achieved by a three-dimensional modeling material containing a specific styrene-based resin.

Accordingly, the present invention is summarized in the following [1] to [14].
[1] A three-dimensional modeling material containing a styrene-based resin and used for a fused deposition modeling three-dimensional printer, wherein the three-dimensional modeling material has at least one glass transition temperature (Tg) in the range of 50°C or higher and lower than 100°C.
[2] The three-dimensional modeling material according to [1], wherein a melt index (MI) of the material measured at 220°C and 10 kg is 30 or more and less than 100.
[3] The three-dimensional modeling material according to [1] or [2], wherein the styrene-based resin includes a styrene-based resin (A) that has a glass transition temperature (Tg) only in the range of lower than 100°C.
[4] The three-dimensional modeling material according to [3], wherein the styrene-based resin (A) contains a structural unit derived from a (meth)acrylate.
[5] The three-dimensional modeling material according to [4], wherein the structural unit derived from the (meth)acrylate is a structural unit derived from at least one selected from the group consisting of acrylates in which a hydrocarbon group derived from an alcohol has 1 to 20 carbon atoms and methacrylates in which a hydrocarbon group derived from an alcohol has 2 to 20 carbon atoms.
[6] The three-dimensional modeling material according to any one of [1] to [5], wherein the styrene-based resin includes a styrene-based resin (B) having a glass transition temperature (Tg) of 100°C or higher.
[7] The three-dimensional modeling material according to any one of [3] to [5], wherein the styrene-based resin includes the styrene-based resin (A) and a styrene-based resin (B) having a glass transition temperature (Tg) of 100°C or higher; and the styrene-based resin has a multilayer structure including the styrene-based resin (A) and the styrene-based resin (B) in respective different layers.
[8] The three-dimensional modeling material according to [7], wherein at least part of the surface of the three-dimensional modeling material is the layer containing the styrene-based resin (A).
[9] A three-dimensional modeling filament comprising the three-dimensional modeling material according to any one of [1] to [8], wherein the filament has a diameter of 1.0 to 5.0 mm.
[10] The three-dimensional modeling filament according to [9], wherein a tensile storage elastic modulus (E') of the filament measured at 100°C and 10 Hz is 1000 MPa or less.
[11] The three-dimensional modeling filament according to [9] or [10], wherein a shear storage elastic modulus (G') of the filament measured at 100°C and 1 Hz is 1×10⁶ Pa or more.
[12] A roll of the three-dimensional modeling filament according to any one of [9] to [11].
[13] A cartridge for a three-dimensional printer, comprising the three-dimensional modeling filament according to any one of [9] to [11] and a container that houses the three-dimensional modeling filament.
[14] A three-dimensional modeling method comprising performing modeling using the three-dimensional modeling material according to any one of [1] to [8] or the three-dimensional modeling filament according to any one of [9] to [11] and a three-dimensional printer comprising a substrate, wherein a temperature of the substrate is maintained as below:
   10°C ≤ the substrate temperature < 100°C.

### Advantageous Effects of Invention

The present invention provides a three-dimensional modeling material and a three-dimensional modeling filament that exhibit good formability in a fused deposition modeling three-dimensional printer.

Specifically, the present invention can provide a three-dimensional modeling material and a three-dimensional modeling filament that are prevented from warping during modeling without precise control of the temperature of a modeling area and can be preferably used for industrial applications.

In a preferred mode, the present invention can provide a three-dimensional modeling material and a three-dimensional modeling filament that have good heat resistance, can form a shaped article having high strength, and have good workability, as does the conventional ABS resin.

### Brief Description of Drawings

[Fig. 1] Fig. 1 shows schematic diagrams illustrating a multilayer structure in the three-dimensional modeling material of the present invention.
[Fig. 2] Fig. 2 is a reference drawing showing a shaped object for evaluating Z-axis strength in Examples. Description of Embodiments

Embodiments of the present invention will be described in detail.

The present invention is not limited to the following description and can be embodied in various modified modes without departing from the scope of the invention.

In the present description, an expression including "to" between numerical values or physical property values is used to indicate a range including these values sandwiching the "to."

### [Three-dimensional modeling material]

The three-dimensional modeling material of the present invention is a three-dimensional modeling material containing a styrene-based resin and used for a fused deposition modeling three-dimensional printer and is characterized by having at least one glass transition temperature (Tg) in the range of 50°C or higher and lower than 100°C.

### [Physical properties of three-dimensional modeling material]

The three-dimensional modeling material of the present invention has at least one glass transition temperature (Tg) in the range of 50°C or higher and lower than 100°C. The Tg is preferably 60°C or higher, more preferably 70°C or higher, and still preferably 80°C or higher and is preferably 98°C or lower, more preferably 95°C or lower, and still more preferably 90°C or lower. It is preferable that the Tg is equal to or higher than the above lower limit because a shaped article formed from the three-dimensional modeling material of the present invention has good heat resistance. It is preferable that the Tg is equal to or lower than the above upper limit because the warpage of the shaped object during three-dimensional modeling can be prevented.

The three-dimensional modeling material of the present invention may be a composition composed of a plurality of resins, as described later. Therefore, the three-dimensional modeling material may have a plurality of glass transition temperatures (Tg's). In this case, it is only necessary that at least one Tg be within the above range. It is particularly preferable that the three-dimensional modeling material has a Tg of lower than 100°C and also has another Tg of 100°C or higher because prevention of warpage during modeling and heat resistance can be easily achieved simultaneously.

In the present description, each glass transition temperature (Tg) is measured using a differential scanning calorimeter according to JIS K7121. No particular limitation is imposed on the measurement conditions such as temperature. Specifically, it is preferable to perform the measurement under the conditions described later in Examples.

In the three-dimensional modeling material of the present invention, its melt index (MI) measured at 220°C and 10 kg is preferably from 30 to 100 inclusive. The MI is more preferably 40 or more and still more preferably 50 or more and is more preferably 90 or less and still more preferably 80 or less. It is preferable that the MI is equal to or more than the above lower limit because high-speed formability during three-dimensional modeling tends to be good. It is preferable that the MI is equal to or lower than the above upper limit because the molecular weight is not excessively low and therefore high strength tends to be obtained.

In the present description, the MI is measured using a melt index meter according to JIS K7210. Specifically, it is preferable to perform the measurement under the conditions described later in Examples.

The unit of the MI is "g/10 min." However, in the present description, the unit of the MI is omitted.

In the three-dimensional modeling material of the present invention, its tensile storage elastic modulus (E') measured at 100°C and 10 Hz is preferably 1000 MPa or less and more preferably 900 MPa or less, from the viewpoint of preventing warpage during modeling. From the viewpoint of heat resistance of the shaped object and heat resistance during modeling, the E' is preferably 1 MPa or more, more preferably 10 MPa or more, and still more preferably 100 MPa or more. If the heat resistance of the shaped object is low, it is feared that the shaped object may deform at high temperature. If the heat resistance during modeling is low, it is feared that the shaped object may deform during modeling and a modeling fault may occur.

In the three-dimensional modeling material of the present invention, its tensile storage elastic modulus (E') measured at 30°C and 10 Hz is preferably 500 MPa or more, more preferably 1000 MPa or more, and still more preferably 1500 MPa or more, from the viewpoint of the room temperature strength of a filament and the shaped object. The upper limit of E' is generally about 5000 MPa or less.

In the three-dimensional modeling material of the present invention, its shear storage elastic modulus (G') measured at 100°C and 1 Hz is preferably 0.8×10⁶ Pa or more, more preferably 1×10⁶ Pa or more, and still more preferably 3×10⁶ Pa or more, from the viewpoint of heat resistance during modeling. If the heat resistance during modeling is low, it is feared that the shaped object may deform during modeling and a modeling fault may occur. If the G' is excessively high, warpage is likely to occur during modeling. Therefore, the G' is preferably 1×10⁷ Pa or less. The preferred G' can be achieved, for example, by adding rubber particles to the resin or using a combination of a resin only having a Tg of 100°C or lower and a resin having a Tg of 100°C or higher.

Generally, the shear storage elastic modulus (G') of a resin cannot be measured after the resin solidified. When the measurement cannot be performed, the shear storage elastic modulus (G') can be regarded as a large value exceeding 1×10⁷ Pa.

In the present description, these storage moduli can be measured using generally known measurement methods. No particular limitation is imposed on the measurement conditions. Specifically, the storage moduli can be measured under the conditions described later in Examples.

### [Styrene-based resin]

The three-dimensional modeling material of the present invention contains a styrene-based resin.

The styrene-based resin is a resin having at least a structural unit derived from an aromatic vinyl-based monomer and is preferably a resin having a structural unit derived from styrene. The styrene-based resin may optionally have a structural unit derived from a vinyl cyanide-based monomer, an unsaturated carboxylic acid alkyl ester-based monomer, a conjugated diene-based monomer, another vinyl-based monomer, etc.

The styrene-based resin can be obtained by subjecting a monomer mixture containing the aromatic vinyl-based monomer and optionally containing the vinyl cyanide-based monomer, the unsaturated carboxylic acid alkyl ester-based monomer, the conjugated diene-based monomer and/or an additional vinyl-based monomer that is copolymerizable with the above monomers to well-known bulk polymerization, bulk-suspension polymerization, solution polymerization, precipitation polymerization, or emulsion polymerization.

No particular limitation is imposed on the aromatic vinyl-based monomer, and specific examples thereof include styrene, α-methylstyrene, o-methylstyrene, p-methylstyrene, o-ethylstyrene, p-ethylstyrene, and p-t-butylstyrene. Of these, styrene or α-methylstyrene is preferably used. One or two or more of them may be used. Among the monomer components forming the styrene-based resin, the aromatic vinyl-based monomer is contained in an amount of preferably 20 wt% or more and more preferably 50 wt% or more.

No particular limitation is imposed on the vinyl cyanide-based monomer, and specific examples thereof include acrylonitrile, methacrylonitrile, and ethacrylonitrile. Of these, acrylonitrile is preferably used. One or two or more of them may be used. One or two or more of them may be used.

No particular limitation is imposed on the unsaturated carboxylic acid alkyl ester-based monomer, and preferred examples thereof include esters of alcohols having 1 to 20 carbon atoms and (meth)acrylic acid. These esters may have a substituent, and examples of the substituent include a hydroxy group and chlorine.

Specific examples of the unsaturated carboxylic acid alkyl ester-based monomer include methyl (meth)acrylate, ethyl (meth)acrylate, n-propyl (meth)acrylate, n-butyl (meth)acrylate, t-butyl (meth)acrylate, n-hexyl (meth)acrylate, cyclohexyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate, and 2,3,4,5-tetrahydroxypentyl (meth)acrylate. One or two or more of them may be used. The "(meth)acrylic acid" as used herein means acrylic acid or methacrylic acid.

No particular limitation is imposed on the conjugated diene-based monomer, and examples thereof include 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, and chloroprene. The conjugated diene-based monomer is preferably 1,3-butadiene, isoprene, or 1,3-pentadiene and more preferably 1,3-butadiene or isoprene. One or two or more of them may be used.

No particular limitation is imposed on the additional vinyl-based monomer so long as it is copolymerizable with the aromatic vinyl-based monomer and with the vinyl cyanide-based monomer, the unsaturated carboxylic acid alkyl ester-based monomer, and the conjugated diene-based monomer that are used optionally.

Specific examples of the additional vinyl-based monomer include the following monomers:
maleimide-based monomers such as N-methylmaleimide, N-ethylmaleimide, N-cyclohexylmaleimide, and N-phenylmaleimide;
vinyl-based monomers having a carboxyl group or an anhydrous carboxyl group such as acrylic acid, methacrylic acid, maleic acid, monoethyl maleate, maleic anhydride, phthalic acid, and itaconic acid;
vinyl-based monomers having a hydroxy group such as 3-hydroxy-1-propene, 4-hydroxy-1-butene, cis-4-hydroxy-2-butene, trans-4-hydroxy-2-butene, 3-hydroxy-2-methyl-1-propene, cis-5-hydroxy-2-pentene, trans-5-hydroxy-2-pentene, and 4,4-dihydroxy-2-butene;
vinyl-based monomers having an amino group or a derivative thereof such as acrylamide, methacrylamide, N-methylacrylamide, butoxymethylacrylamide, N-propylmethacrylamide, aminoethyl acrylate, propylaminoethyl acrylate, dimethylaminoethyl methacrylate, ethylaminopropyl methacrylate, phenylaminoethyl methacrylate, cyclohexylaminoethyl methacrylate, N-vinyldiethylamine, N-acetylvinylamine, allylamine, methallylamine, N-methylallylamine, and p-aminostyrene; and
vinyl-based monomers having an oxazoline group such as 2-isopropenyl-oxazoline, 2-vinyl-oxazoline, 2-acryloyl-oxazoline, and 2-styryl-oxazoline.

One or two or more of them may be used.

No limitation is imposed on the molecular weight of the styrene-based resin. However, from the viewpoint of extrusion stability when a filament obtained using the three-dimensional modeling material is produced and from the viewpoint of obtaining mechanical strength necessary for collecting the filament by winding it around a bobbin, the weight average molecular weight (Mw) of the styrene-based resin is preferably 50,000 or more and more preferably 80,000 or more. From the viewpoint of further reducing the melt viscosity of the obtained filament at low temperature, the weight average molecular weight (Mw) is preferably 400,000 or less. The weight average molecular weight as used herein is a polystyrene-equivalent weight average molecular weight measured by GPC using chloroform as a solvent.

Specific examples of the styrene-based resin used in the three-dimensional modeling material of the present invention include acrylonitrile-butadiene-styrene (ABS) resins, methyl methacrylate-butadiene-styrene (MBS) resins, and butadiene-styrene-based resins.

Specific examples of the ABS resins include HF-3 and EX19C manufactured by Techno-UMG Co., Ltd. and GT-R-61A manufactured by Denka Company Limited.

Examples of the MBS resins include ESTYRENE MBS manufactured by NIPPON STEEL & SUMIKIN CHEMICAL Co., Ltd. and CLEAREN TH-11 manufactured by Denka Company Limited.

Examples of the butadiene-styrene-based resin include CLEAREN 730L manufactured by Denka Company Limited.

In terms of the strength, post-processing workability, heat resistance, etc. of the shaped object, the amount of the styrene-based resin contained in the three-dimensional modeling material of the present invention is preferably 50% or more, more preferably 70% or more, and still more preferably 80% or more based on the total weight of the three-dimensional modeling material. The upper limit is 100%.

Preferably, the styrene-based resin used in the three-dimensional modeling material of the present invention includes a styrene-based resin (A) only having a glass transition temperature (Tg) in the range of lower than 100°C and/or a styrene-based resin (B) having a glass transition temperature (Tg) of 100°C or higher.

### [Styrene-based resin (A)]

### (Physical properties)

The styrene-based resin (A) used in the three-dimensional modeling material of the present invention only has a glass transition temperature (Tg) in the range of lower than 100°C. The styrene-based resin (A) may have a plurality of Tg's. However, all the Tg's are in the range of lower than 100°C, and the styrene-based resin (A) has no Tg in the range of 100°C or higher. As for the Tg's, at least one Tg is preferably 50°C or higher, more preferably 60°C or higher, still more preferably 70°C or higher, and particularly preferably 75°C or higher and is preferably 98°C or lower, more preferably 95°C or lower, and still more preferably 90°C or lower. It is preferable that each Tg is equal to or lower than the above upper limit because warpage during modeling using the three-dimensional modeling material can be prevented. When each Tg is equal to or lower than the upper limit, the difference between the modeling atmosphere temperature and the temperature at which the resin ejected from a nozzle of a three-dimensional printer solidifies during modeling is small, and therefore shrinkage stress due to linear expansion after solidified is small, so that warpage may be prevented. It is preferable that each Tg is equal to or higher than the above lower limit because the heat resistance of a shaped object using the three-dimensional modeling material of the present invention is improved.

The method for controlling the Tg of the styrene-based resin (A) is not particularly specified. It is preferable to use a method in which monomers described later are copolymerized.

The melt index (MI) of the styrene-based resin (A) at 220°C and 10 kg is preferably 30 or more and less than 100 and more preferably 50 or more and less than 90. As for the properties of the three-dimensional modeling material to be obtained, it is preferable that the MI is equal to or more than the above lower limit because the high-speed formability during three-dimensional modeling tends to be high. It is preferable that the MI is equal to or lower than the above upper limit because the molecular weight is not excessively low and therefore high strength tends to be obtained.

The MI of the styrene-based resin (A) can be adjusted by changing the molecular weight of the resin. The appropriate molecular weight varies depending on the composition of the resin. When the resin has a preferred composition described later, the Mw is preferably 50000 or more and less than 200000 and more preferably 100000 or more and less than 180000.

From the viewpoint of preventing warpage during modeling, the tensile storage elastic modulus (E') of the styrene-based resin (A) that is measured at 100°C and 10 Hz is preferably less than 1000 MPa, more preferably less than 800 MPa, and still more preferably less than 500 MPa. From the viewpoint of heat resistance of the shaped object and heat resistance during modeling, the E' is preferably 1 MPa or more.

The tensile storage elastic modulus (E') at 100°C can be adjusted by changing the composition of the resin, copolymerization ratios, etc.

From the viewpoint of the room temperature strength of the three-dimensional modeling material and the shaped object to be obtained, the tensile storage elastic modulus (E') of the styrene-based resin (A) that is measured at 30°C and 10 Hz is preferably 500 Ma or more, more preferably 1000 MPa or more, and still more preferably 1500 MPa or more. The E' is generally about 5000 MPa or less.

The tensile storage elastic modulus (E') measured at 30°C and 10 Hz can be adjusted by changing the composition of the resin, copolymerization ratios, etc.

### (Composition)

The styrene-based resin (A) used in the three-dimensional modeling material of the present invention is a resin having a structural unit derived from an aromatic vinyl-based monomer and is preferably a resin having a structural unit derived from styrene. The styrene-based resin (A) may further contain a structural unit derived from the same monomer as any of the monomers that can be used for the above-described styrene-based resin, but it is preferable that the monomer is selected such that the styrene-based resin (A) only has a Tg in the range of lower than 100°C.

For example, it is preferable that the styrene-based resin (A) contains a structural unit derived from an unsaturated carboxylic acid alkyl ester-based monomer. In particular, a structural unit derived from a (meth)acrylate is more preferable. From the viewpoint of achieving the target Tg, it is still more preferable that the styrene-based resin (A) contains a structural unit derived from at least one selected from the group consisting of acrylates in which a hydrocarbon group derived from an alcohol has 1 to 20 carbon atoms and methacrylates in which a hydrocarbon group derived from an alcohol has 2 to 20 carbon atoms. Particularly preferably, the styrene-based resin (A) contains a structural unit derived from an acrylate in which a hydrocarbon group derived from an alcohol has 1 to 20 carbon atoms.

Specific examples of the (meth)acrylate include methyl methacrylate, ethyl methacrylate, butyl methacrylate, 2-ethylhexyl methacrylate, methyl acrylate, ethyl acrylate, butyl acrylate, and 2-ethylhexyl acrylate. In particular, acrylates in which a hydrocarbon group derived from an alcohol has 1 to 20 carbon atoms and methacrylates in which a hydrocarbon group derived from an alcohol has 2 to 20 carbon atoms are preferred. One or two or more of them may be used.

From the viewpoint of achieving the target Tg even when the copolymerization ratio is low, the styrene-based resin (A) is more preferably methyl acrylate, ethyl acrylate, butyl acrylate, 2-ethylhexyl acrylate, etc.

In this case, from the viewpoint of adjusting the Tg to less than 100°C, the copolymerization ratio of the acrylate to the total weight of the styrene-based resin (A) is preferably 1 wt% or more and more preferably 2 wt% or more. From the viewpoint of the heat resistance and strength of the styrene-based resin (A) and of maintaining its post-processing workability, the copolymerization ratio of the acrylate to the total weight of the styrene-based resin (A) is preferably less than 10 wt% and more preferably less than 8 wt%.

From the viewpoint of improving the color development of the three-dimensional modeling material finally obtained, it is preferable to further contain methyl methacrylate as another unsaturated carboxylic acid alkyl ester-based monomer.

From the viewpoint of the color development, the copolymerization ratio of the methyl methacrylate to the total weight of the styrene-based resin (A) is preferably 5 wt% or more and more preferably 10 wt% or more. From the viewpoint of the strength and shock resistance of the three-dimensional modeling material and the shaped object and of maintaining their post-processing workability, the copolymerization ratio of the methyl methacrylate to the total weight of the styrene-based resin (A) is preferably 60 wt% or less and more preferably 50 wt% or less.

Preferably, the styrene-based resin (A) contains a structural unit derived from a conjugated diene-based monomer. Examples of the conjugated diene-based monomer include 2-methyl-1,3-butadiene, 2,4-hexadiene, and 1,3-butadiene. Of these, from the viewpoint of shock resistance, 1,3-butadiene is preferred. One or two or more of them may be used.

From the viewpoint of the shock resistance of the styrene-based resin (A), the copolymerization ratio of the conjugated diene-based monomer to the total weight of the styrene-based resin (A) is preferably 1 wt% or more and more preferably 3 wt% or more. From the viewpoint of the heat resistance and strength of the styrene-based resin (A), the copolymerization ratio of the conjugated diene-based monomer to the total weight of the styrene-based resin (A) is preferably 30 wt% or less and more preferably 20 wt% or less.

Preferably, the styrene-based resin (A) contains a structural unit derived from a vinyl cyanide-based monomer. No particular limitation is imposed on the vinyl cyanide-based monomer, and specific examples thereof include acrylonitrile, methacrylonitrile, and ethacrylonitrile. Of these, acrylonitrile is used preferably. One or two or more of them may be used.

It is preferable to contain the vinyl cyanide-based monomer because, when the three-dimensional modeling filament has a core-sheath structure described later and a resin containing a vinyl cyanide-based monomer such as an ABS resin is used as the styrene-based resin (B), the adhesion between the core and the sheath is improved.

From the viewpoint of the adhesion between the core and the sheath when a resin containing a vinyl cyanide-based monomer such as an ABS resin is used as the styrene-based resin (B) described later to form the core-sheath structure, the copolymerization ratio of the vinyl cyanide-based monomer to the total weight of the styrene-based resin (A) is preferably 1 wt% or more and more preferably 5 wt% or more. From the viewpoint of the shock resistance of the styrene-based resin (A), the copolymerization ratio of the vinyl cyanide-based monomer to the total weight of the styrene-based resin (A) is preferably 95 wt% or less.

The styrene-based resin (A) is preferably a styrene-based resin containing structural units derived from any of the above-described monomers such as an MBS resin. However, the above-described Tg can be achieved also by mixing any of styrene-based resins listed for the styrene-based resin (B) described later with a styrene-based resin that is compatible with the any of the styrene-based resins and has a very low weight average molecular weight of about 5000 or less or by adding a plasticizer such as a phosphorus-based flame retardant to the any of the styrene-based resins. However, the addition of the resin with a very low molecular weight or the plasticizer is not preferred because it is feared that a reduction in strength may occur or it may be difficult to control the melt index.

The above Tg can be achieved also by adding, to any of the styrene-based resins listed for the styrene-based resin (B) described later, a resin that is compatible with this styrene-based resin and has a low Tg. Examples of the resin having a low Tg include styrene-based resins and polybutylene succinate (PBS). In particular, when an ABS resin or an AS resin is used as the styrene-based resin (B), it is preferable from the viewpoint of compatibility to use polybutylene succinate (PBS). When a resin with high compatibility is added, the Z-axis strength of the shaped object tends to be high. However, this technique is not preferable in terms of productivity because the additional step of adding the low-Tg resin and kneading the mixture is required.

### [Styrene-based resin (B)]

### (Physical properties)

The styrene-based resin (B) used in the three-dimensional modeling material of the present invention has a glass transition temperature (Tg) of 100°C or higher. The Tg of the styrene-based resin (B) is preferably 101°C or higher. It is only necessary that the styrene-based resin (B) have at least one Tg in the range of 100°C or higher. When the styrene-based resin (B) has a plurality of Tg's, the resin may have a Tg of lower than 100°C.

When the styrene-based resin (B) has a Tg equal to or higher than the above lower limit, the heat resistance of the shaped object of the three-dimensional modeling material to be obtained and the heat resistance during modeling are improved. In particular, when the styrene-based resin (A) contained has a low Tg, the heat resistance of the three-dimensional modeling material and the heat resistance of the shaped object tend to decrease, so that it is preferable to use the styrene-based resin (B) in combination with the styrene-based resin (A). The upper limit of the Tg of the styrene-based resin (B) is generally 125°C or lower.

In the styrene-based resin (B) used in the three-dimensional modeling material of the present invention, the melt index (MI) at 220°C and 10 kg is preferably 30 or more and less than 100 and more preferably 50 or more and less than 90. As for the properties of the three-dimensional modeling material to be obtained, it is preferable that the MI is equal to or more than the above lower limit because the high-speed formability during three-dimensional modeling tends to be high. It is preferable that the MI is equal to or less than the above upper limit because the molecular weight is not excessively low and therefore the strength tends to be high.

The MI of the styrene-based resin (B) can be adjusted by changing the molecular weight of the resin. The appropriate molecular weight varies depending on the composition of the resin. When the resin has a preferred composition described later, the Mw is preferably 50000 or more and less than 200000 and more preferably 100000 or more and less than 180000.

From the viewpoint of the heat resistance of the shaped object and the heat resistance during modeling, the tensile storage elastic modulus (E') of the styrene-based resin (B) that is measured at 100°C and 10 Hz is preferably 900 MPa or more and more preferably 1000 MPa or more. The E' is generally about 5000 MPa or less.

The tensile storage elastic modulus (E') measured at 100°C and 10 Hz can be adjusted by changing the composition of the resin, copolymerization ratios, etc.

From the viewpoint of the room temperature strength of the three-dimensional modeling material and the shaped object to be obtained, the tensile storage elastic modulus (E') of the styrene-based resin (B) that is measured at 30°C and 10 Hz is preferably 500 Ma or more, more preferably 1000 MPa or more, and still more preferably 1500 MPa or more. The E' is generally about 5000 MPa or less.

The tensile storage elastic modulus (E') measured at 30°C and 10 Hz can be adjusted by changing the composition of the resin, copolymerization ratios, etc.

### (Composition)

The styrene-based resin (B) used in the three-dimensional modeling material of the present invention is a resin having a structural unit derived from an aromatic vinyl-based monomer and is preferably a resin having a structural unit derived from styrene. The styrene-based resin (B) may further contain a structural unit derived from the same monomer as any of the monomers that can be used for the above-described styrene-based resin, but it is preferable that the monomer is selected such that the styrene-based resin (B) has a Tg in the range of 100°C or higher.

Examples of the styrene-based resin (B) include ABS resins, AS resins, MBS resins, MS resins, and polystyrenes. Of these, ABS resins are preferred because of their excellent strength and shock resistance. When a multilayer structure described later is used, it is preferable from the viewpoint of the bonding strength between the styrene-based resins (A) and (B) that a resin having a structural unit that is the same as one of the structural units of the styrene-based resin (A) is selected.

### [Composition of three-dimensional modeling material]

No particular limitation is imposed on the composition of the three-dimensional modeling material of the present invention so long as it contains a styrene-based resin. The three-dimensional modeling material may be composed only of a styrene-based resin or may contain a resin other than the styrene-based resin.

When the three-dimensional modeling material contains the styrene-based resin (A) as the styrene-based resin, the Tg of the three-dimensional modeling material can be adjusted within the desired range. However, to improve the heat resistance of the shaped object and the heat resistance during modeling, it is preferable that the styrene-based resin (A) is used in combination with one or both of the styrene-based resin (B) and rubber particles described later.

In this case, from the viewpoint of preventing warpage during modeling, the content of the styrene-based resin (A) relative to the total weight of the three-dimensional modeling material is preferably 20 wt% or more and more preferably 30 wt% or more.

From the viewpoint of the heat resistance of the shaped object and the heat resistance during modeling, the content of the styrene-based resin (B) relative to the total weight of the three-dimensional modeling material is preferably 5 wt% or more and more preferably 10 wt% or more.

From the viewpoint of heat resistance during modeling, the content of the rubber particles relative to the total weight of the three-dimensional modeling material is preferably 1 wt% or more and preferably 2 wt% or more. From the viewpoint of preventing a reduction in flowability, the content of the rubber particles relative to the total weight of the three-dimensional modeling material is preferably 20 wt% or less and more preferably 10 wt% or less.

When the styrene-based resin does not include the styrene-based resin (A), e.g., when the styrene-based resin includes only the styrene-based resin (B), it is preferable to add a resin containing a low-Tg component such as polylactic acid (PLA) or amorphous polyester (PETG) in order to adjust the Tg of the three-dimensional modeling material within the desired range.

Examples of the method for adjusting the Tg of the three-dimensional modeling material within the desired range include a method in which the styrene-based resin includes the styrene-based resin (A) and a method in which the styrene-based resin includes a low-Tg component resin other than the styrene-based resin (A). From the viewpoint of productivity, the strength and heat resistance of a filament to be obtained, and the strength of the shaped object, it is particularly preferable that the three-dimensional modeling material contains, as the styrene-based resin, at least the styrene-based resin (A). Even when the three-dimensional modeling material contains the styrene-based resin (A), the above-described low-Tg component resin may be added.

### [Additional components]

In addition to the above-described resins, additional components may be added to the three-dimensional modeling material of the present invention so long as the effects of the invention are not impaired. The following components may be used in any combination.

### (Rubber particles)

It is preferable to use rubber particles for the purpose of improving the heat resistance of the three-dimensional modeling material during modeling and its shock resistance.

Examples of the rubber particles include acrylic-based rubber particles, butadiene-based rubber particles, silicon-based rubber particles, and olefin-based rubber particles. From the viewpoint of dispersibility in the styrene-based resin, butadiene-based rubber particles are preferred. Examples of the butadiene-based rubber particles include METABLEN C-223A manufactured by Mitsubishi Chemical Corporation.

### (Filler)

For the purpose of improving the stiffness of the three-dimensional modeling material and the stiffness of the filament, it is preferable to use an organic filler or an inorganic filler.

Examples of the organic filler include cellulose fibers, aramid fibers, polyester fibers, and polyamide fibers.

Examples of the inorganic filler include carbon fibers, glass fibers, mica, talc, silica, and alumina. Of these, carbon fibers, glass fibers, mica, and talk are preferable in terms of stiffness.

Moreover, for the purpose of imparting specific characteristics to the three-dimensional modeling material, additives such as a flame retardant, an antioxidant, an ultraviolet absorber, and an antifogging agent may be added.

An additional resin may be added so long as the effects of the invention are not impaired.

### [Structure of three-dimensional modeling material]

No particular limitation is imposed on the form of the three-dimensional modeling material of the present invention so long as it can be applicable to a fused deposition modeling three-dimensional printer. Examples of the form include a powder, pellets, granules, and a filament.

When a plurality of resins are used for the three-dimensional modeling material of the present invention, the plurality of resins may be mixed to form a homogeneous material, or the two or more resins used are disposed in respective different layers to form a multilayer structure. In particular, as for the three-dimensional modeling filament of the present invention, it is preferable to select a filament formed from a resin mixture or a filament having a multilayer structure according to the desired characteristics.

From the viewpoint of heat resistance, cost, and productivity, a multilayer structure containing a low-Tg resin only having a Tg of lower than 100°C and a high-Tg resin having a Tg of 100°C or higher in respective different layers may be used. For example, the three-dimensional modeling material or the three-dimensional modeling filament may have a multilayer structure containing the styrene-based resin (A) and the styrene-based resin (B) in respective different layers.

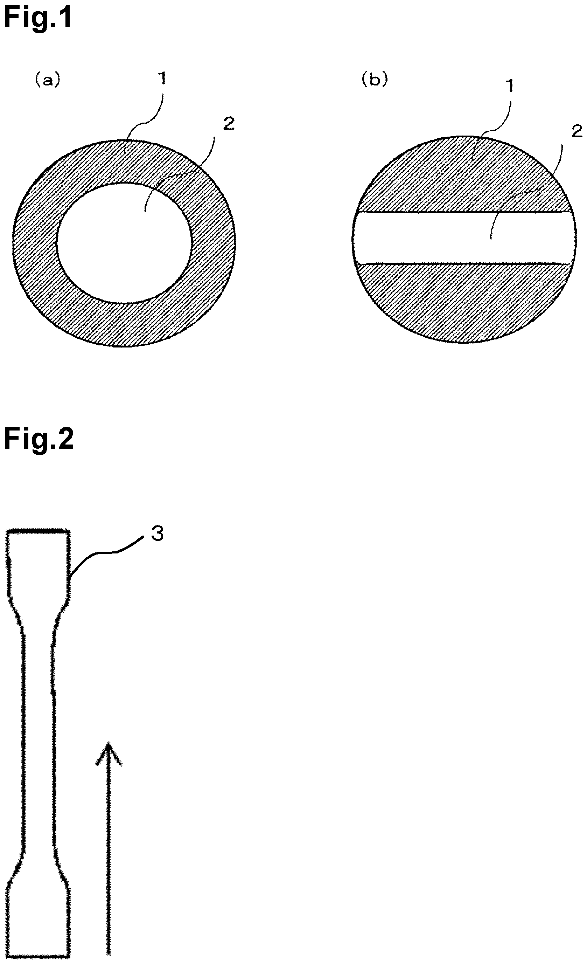

No particular limitation is imposed on the multilayer structure. Specific examples of the multilayer structure of the three-dimensional modeling material of the present invention will be described using Fig. 1.

Fig. 1 shows cross-sectional views of three-dimensional modeling materials. For example, in the case of three-dimensional modeling filaments, cross sections obtained by cutting the filaments at given points perpendicularly to their longitudinal axis are observed. Examples of the multilayer structure include a pattern in which two or more resins are formed into a core-sheath structure as shown in Fig. 1(a) and a pattern in which two or more resins are stacked such that a cross section of the filament has a layered structure as shown in Fig. 1(b).

No particular limitation is imposed on the placement positions of the resins in the multilayer structure. It is preferable that at least part of the surface of the three-dimensional modeling material is a layer containing the styrene-based resin (A) because the shaped object can have high interlayer adhesion (high Z-axis strength). It is more preferable that the outermost layer contains the styrene-based resin (A). Specifically, it is preferable that, in Figs. 1(a) and 1(b), portions denoted by symbol 1 that occupy the surface or most of the surface are the styrene-based resin (A) and portions denoted by symbol 2 are the styrene-based resin (B).

### [Three-dimensional modeling filament]

The three-dimensional modeling filament of the present invention is produced using the above-described three-dimensional modeling material of the present invention. No particular limitation is imposed on the method for producing the three-dimensional modeling filament of the present invention. Generally, the three-dimensional modeling filament can be obtained using, for example, a method in which the three-dimensional modeling material of the present invention is molded using a well-known molding method such as extrusion molding or a method in which the filament is directly formed during the production of the three-dimensional modeling material. For example, when the three-dimensional modeling filament of the present invention is obtained by extrusion molding, a production condition of generally 150 to 260°C and preferably 170 to 250°C is used.

The diameter of the three-dimensional modeling filament of the present invention depends on the performance of a system used and is preferably 1.0 to 5.0 mm and more preferably 1.3 to 3.5 mm. From the viewpoint of stable raw material supply, it is preferable that the accuracy of the diameter measured at a given measurement point falls within an error of ±5%.

When the three-dimensional modeling filament of the present invention is used to produce a shaped article using a fused deposition modeling three-dimensional printer, it is required that the three-dimensional modeling filament be stably stored and stably supplied to the fused deposition modeling three-dimensional printer.

Therefore, from the viewpoint of long-term storage, stable feeding, protection from environment factors such as humidity, prevention of twisting, etc., it is preferable that the three-dimensional modeling filament of the present invention is wound around a bobbin and the filament roll is hermetically packaged or housed in a cartridge.

Examples of the cartridge include a cartridge having a structure in which, in addition to the roll wound around the bobbin, a dampproof material or a hygroscopic material is used inside the structure and which is sealed except for at least an orifice for feeding the filament.

The water content of the three-dimensional modeling filament is preferably 3,000 ppm or less and more preferably 2,500 ppm or less.

It is preferable that the product of the three-dimensional modeling filament is sealed such that the water content of the filament is 3,000 ppm or less and more preferably 2,500 ppm or less.

To prevent blocking of the three-dimensional modeling filament when the filament is wound into a roll, a blocking agent may be applied to the surface of the filament, or the surface of the filament may be coated with the blocking agent.

Examples of the blocking agent that can be used include silicone-based blocking agents, inorganic fillers such as talc, and aliphatic acid metal salts. Only one of these blocking agents may be used, or a combination of two or more may be used.

Preferred forms of the filament are a roll wound around, for example, a bobbin and a three-dimensional printer cartridge including the filament housed in a container. In particular, the cartridge including the roll of the filament housed in the container is generally placed inside or near a three-dimensional printer, and the filament is continuously introduced from the cartridge into the three-dimensional printer during molding.

### [Three-dimensional modeling method]

By molding the three-dimensional modeling material or the three-dimensional modeling filament of the present invention using a fused deposition modeling three-dimensional printer, a shaped article can be produced.

Generally, the fused deposition modeling three-dimensional printer includes a heatable substrate (modeling table), an extrusion head (nozzle), a heat-fusing unit, and a raw material feeding unit including a filament guide, a filament placement portion, etc. In some material extrusion three-dimensional printers, the extrusion head is integrated with the heat-fusing unit.

The extrusion head is disposed on a gantry structure and can be moved freely in the X-Y plane on the substrate. The substrate is a platform for building a target three-dimensional object, a supporting material, etc. and is preferably configured such that, by heating a stacked object and keeping the temperature, the adhesion to the stacked object can be obtained and that a shaped article to be obtained is formed into a desired three-dimensional object with improved dimensional stability. Generally, at least one of the extrusion head and the substrate is movable in the Z-axis direction perpendicular to the X-Y plane.

The raw material is fed from the raw material feeding unit, introduced into the extrusion head using a pair of facing rollers or gears, heat-fused in the extrusion head, and extruded from the forward end of the nozzle. The extrusion head supplies the raw material onto the substrate while moving and changing its position according to a signal sent based on a CAD model to thereby deposit the raw material layer-by-layer. After completion of this process, the deposited stack is removed from the substrate and optionally separated from the supporting material etc., and unnecessary portions are trimmed. A shaped article can thereby be obtained as a desired three-dimensional object.

Examples of the means for continuously supplying the raw material to the extrusion head include a method in which a filament or a fiber is fed and supplied, a method in which a powder, granules, pellets, etc. are supplied from, for example, a tank through a volumetric feeder, and a method in which a powder, pellets, or granules are plasticized using, for example, an extruder and the plasticized material is extruded and supplied. Of these, the method in which a filament, i.e., the above-described three-dimensional modeling filament of the present invention, is fed and supplied is most preferable from the viewpoint of the simplicity of the process and supply stability.

When the raw material supplied is in the form of a filament, it is preferable from the viewpoint of stable feeding, protection from environmental factors such as humidity, prevention from twisting and kinking, etc. that the raw material wound around a bobbin is housed in a cartridge as described above.

When the raw material supplied is in the form of a filament, the filament is generally engaged with driving rolls such as nip rolls or gear rolls and supplied to the extrusion head while being drawn out. To stabilize the supply of the raw material by enhancing gripping of the filament due to engagement between the filament and the driving rolls, it is also preferable to transfer fine irregular shapes onto the filament surface in advance or add an inorganic additive, a spreading agent, an adhesive, rubber, etc. in order to increase the frictional resistance between the filament and the engagement portion.

In the three-dimensional modeling material of the present invention that is used for the three-dimensional modeling filament of the present invention, the temperature at which flowability suitable for extrusion is obtained is about 180 to about 250°C, which is wider than the applicable temperature range of conventional raw materials used for three-dimensional printers. Therefore, the modeling can be performed by setting the temperature of the thermal extrusion head to preferably 200 to 240°C and setting the substrate temperature (modeling table temperature) to generally 110°C or lower.

The three-dimensional modeling material of the present invention that is used for the three-dimensional modeling filament of the present invention can be preferably used for modeling even when the substrate temperature is lower than 110°C. For example, the three-dimensional modeling material can be preferably used for modeling even when the substrate temperature is lower than 100°C and can also be preferably used for modeling even when the substrate temperature is 90°C or lower, and a shaped article can be stably produced at a substrate temperature of preferably 60 to 85°C. The lower limit of the substrate temperature is generally 10°C or higher, preferably 20°C or higher, and more preferably 50°C or higher.

When the substrate temperature is within the above range, the adhesion between the substrate and the modeling material is improved, and warpage during modeling can be prevented. It is therefore unnecessary to precisely control the substrate temperature and the modeling atmosphere temperature in a high temperature range, as described later.

The temperature of the molten resin ejected from the extrusion head is preferably 180°C or higher and more preferably 190°C or higher and is preferably 250°C or lower and more preferably 240°C or lower.

It is preferable that the temperature of the molten resin is equal to or higher than the above lower limit because the resin can flow sufficiently and therefore the appearance of the shaped object tends to be good even when high-speed modeling is performed. It is preferable that the temperature of the molten resin is equal to or lower than the above upper limit because problems such as thermal decomposition or burning of the resin, smoking, odor emission, sticking, and the occurrence of lumps can be easily prevented.

The molten resin ejected from the extrusion head is ejected in the form of a strand having a diameter of preferably 0.01 to 1 mm and more preferably 0.02 to 0.8 mm. It is preferable to eject the molten resin in the above form because the reproducibility of the shaped object tends to be good.

When the three-dimensional modeling material of the present invention is used, modeling can be preferably performed even when the temperature of the area (modeling area) on which the molten resin ejected from the extrusion head is to be deposited (the modeling atmosphere temperature) is not controlled within the range of, for example, equal to or higher than the temperature at which the resin solidifies. Specifically, the modeling can be preferably performed even when the modeling atmosphere temperature is 10°C or higher and 95°C or lower. Moreover, the modeling can be preferably performed even when the modeling atmosphere temperature is 20°C or higher and 90°C or lower.

The three-dimensional modeling material of the present invention may contain styrene-based resins with glass transition temperatures (Tg's) of 50°C or higher and can be preferably used for modeling even when the modeling atmosphere temperature is lower by 10°C or higher, 20°C or higher, and 25°C or higher than the lowest one of these glass transition temperatures.

The three-dimensional modeling material of the present invention is used for a fused deposition modeling three-dimensional printer. However, even when the three-dimensional modeling material is used for a powder bed fusion three-dimensional printer, it can also be expected to obtain the effect of preventing warpage during modeling.

A shaped article produced by the three-dimensional modeling method of the present invention is excellent in appearance, strength, heat resistance, post-processing workability, etc. Therefore, the shaped article can be preferably used for applications such as: stationery; toys; covers for mobile phones, smartphones, etc.; components such as grips; educational materials; repair parts for consumer electrical appliances and OA devices; various parts for automobiles, motorcycles, bicycles, etc.; members such as building materials; and forming dies for plastics.

### [EXAMPLES]

The details of the present invention will be described by way of Examples, but the invention is not limited to the following Examples so long as the invention does not depart from the scope of the invention. The values of various production conditions and evaluation results in the following Examples have meanings as preferred upper or lower limits in the embodiments of the present invention, and preferred ranges may be ranges defined by combinations of the above-described upper or lower values and values in the following Examples or combinations of the values in the following Examples.

### [Measurement and evaluation methods]

### <Physical property measurement methods>

### [Glass transition temperature (Tg)]

A differential scanning calorimeter (product name: Diamond DSC manufactured by PerkinElmer Co., Ltd.) was used to measure the glass transition temperature (Tg)(°C) of a sample according to JIS K7121. About 10 mg of the sample was heated from 0°C to 250°C at a heating rate of 10°C/minute, held at 250°C for 5 minutes, cooled to 0°C at a cooling rate of 10°C/minute. The thus cooled sample was heated again to 250°C at a heating rate of 10°C/minute. A midpoint glass transition temperature was read from the thermogram measured and used as the glass transition temperature (Tg)(°C).

### [Melt index (MI)]

A melt index meter (product name: SEMI MELT INDEXER manufactured by Toyo Seiki Seisaku-sho, Ltd.) was used to measure the MI (g/10 min) at 220°C and a load of 10 kg according to JIS K7210.

### [Molecular weight]

A sample was dissolved in chloroform, and the weight average molecular weight (Mw) of the sample was measured by gel permeation chromatography (GPC).

### [Tensile storage elastic modulus (E')]

Raw material pellets or filaments obtained in Examples and a Comparative Example were molded into sheets with a thickness of about 0.5 mm using a hot press, and the sheets were used as measurement samples. A dynamic viscoelasticity meter (product name: viscoelasticity spectrometer DVA 200 manufactured by IT Keisoku K.K.) was used to measure the storage elastic modulus (E') of each sample at from -100°C to 250°C under the conditions of a vibration frequency of 10 Hz, a heating rate of 3°C/minute, and a strain of 0.1%, and the storage elastic modulus (E'100°C) at 100°C and the storage elastic modulus (E'30°C) at 30°C were determined from the data obtained.

### [Shear storage elastic modulus (G')]

The filaments obtained in the Examples and the Comparative Example were molded into sheets with a thickness of about 0.5 mm using a hot press, and the sheets were used as measurement samples. A rheometer (product name: MARS II manufactured by Thermo Fisher Scientific K.K.) was used to measure the shear storage elastic modulus (G') of each sample at from 300°C to 80°C at a frequency of 1 Hz and a cooling rate of 3°C/min. The shear storage elastic modulus (G'100°C) at 100°C was determined from the data obtained.

### <Formability evaluation methods>

### [Warpage]

A 3D printer (product name: MF-2200D manufactured by MUTOH INDUSTRIES LTD.) was used to form a plate with a length of 100 mm × a width of 25 mm × a thickness of 5 mm at a substrate (modeling table) temperature of 80°C, a nozzle temperature of 240°C, a modeling speed of 30 mm/s, and an infill percentage of 100%. The formed plate was placed on an even table and evaluated according to the following criteria based on the presence or absence of a gap between the plate and the table. The modeling atmosphere temperature in this case was about 30 to about 50°C.
Poor: A gap was present.
Good: No gap was present.

### [High-speed formability]

A 3D printer (product name: MF-2200D manufactured by MUTOH INDUSTRIES LTD.) was used to form a cylinder with a diameter of 75 mm φ × a height of 90 mm at a substrate (modeling table) temperature of 80°C, a nozzle temperature of 240°C, and a modeling speed of 100 mm/s in an automatic container production mode (a mode in which only the outer wall of the shaped object is formed by stacking a material in a spiral manner), and the external appearance of the shaped object was evaluated according to the following criteria. The modeling atmosphere temperature in this case was about 30 to about 50°C.
Poor: Modeling faults such as holes and uneven ejection from the nozzle occurred.
Good: No modeling faults such as holes and uneven ejection from the nozzle occurred, and the outer appearance was good.

### [Heat resistance during modeling]

A 3D printer (product name: MF-2200D manufactured by MUTOH INDUSTRIES LTD.) was used to form a cylinder with a diameter of 50 mm φ × a height of 60 mm at a substrate (modeling table) temperature of 100°C, a nozzle temperature of 240°C, and a modeling speed of 100 mm /s in an automatic container production mode (a mode in which only the outer wall of the shaped object is formed by stacking a material in a spiral manner), and the state of the cylinder was evaluated according to the following criteria. The modeling atmosphere temperature in this case was about 30 to about 50°C.
Poor: The shaped object deformed, and its cylindrical shape could not be maintained.
Good: The shaped object did not deform, and its cylindrical shape could be maintained during modeling.

### <Method for evaluating strength of shaped object>

### [Z-axis strength]

A 3D printer (product name: MF-2200D manufactured by MUTOH INDUSTRIES LTD.) was used to form a shaped object 3 having a dumbbell shape shown in Fig. 2 (length: 75 mm, width: 10 mm (tested portion: 5 mm), thickness: 5 mm) at a substrate (modeling table) temperature of 80°C, a nozzle temperature of 240°C, and a modeling speed of 60 mm/s with a direction of an arrow in Fig. 2 as the modeling direction (the Z-axis direction). The obtained shaped object 3 having the dumbbell shape was subjected to a tensile test using a universal tensile-compression tester manufactured by Intesco (Model 2050) at an initial chuck distance of 45 mm and a speed of 50 mm/min. The Z-axis strength of the shaped object was judged according to the following criteria based on the detected maximum tensile strength.
Poor: The maximum strength was less than 15 MPa.
Good: The maximum strength was 15 MPa or more.

### [Raw materials used]

Styrene-based resin (A1): product name: TH-11 manufactured by Denka Company Limited, Tg: 86°C, MI: 76, Mw: about 160000, E'100°C: 72 MPa, E'30°C: 2274 MPa, composition (wt%): styrene/1,3-butadiene/methyl methacrylate/butyl acrylate = 56/4/35/5
Styrene-based resin (A2): product name: CL-430 manufactured by Denka Company Limited, Tg: 84°C, MI: 34, Mw: about 180000, E'100°C: 42 MPa, E'30°C: 1940 MPa, composition (wt%): styrene/1,3-butadiene/methyl methacrylate/butyl acrylate = 56/6/34/4
ABS resin (B1): product name: GT-R-61A manufactured by Denka Company Limited, Tg: 104°C, MI: 74, Mw: about 120000, E'100°C: 1534 MPa, E'30°C: 2189 MPa
ABS resin (B2): product name: PA757H manufactured by Chi Mei Corp., Tg: 104°C, MI: 30, Mw: about 110000, E'100°C: 1219 MPa, E'30°C: 1710 MPa
PBS resin: product name: BioPBS FD92 manufactured by Mitsubishi Chemical Corporation, Tg: lower than 0°C, Tm: 86°C
PETG resin: product name Skygreen S2008 manufactured by SK Chemicals, Tg: 78°C

### [Examples and Comparative Example]

### [Example 1]

The styrene-based resin (A1) was used, extruded using a single screw extruder from a nozzle with a diameter of 2.5 mm at a fusing temperature of 230 to 250°C, and cooled in cooling water at 70°C, and a filament with a diameter of 1.75 mm was thereby obtained. The physical properties of the filament obtained and the results of the formability evaluation are shown in Table 1.

### [Example 2]

The styrene-based resin (A2) was used, and the same procedure as in Example 1 was repeated to obtain a filament with a diameter of 1.75 mm. The physical properties of the filament obtained and the results of the formability evaluation are shown in Table 1.

### [Example 3]

The styrene-based resin (A1) and METABLEN C-223A manufactured by Mitsubishi Chemical Corporation and used as butadiene-based rubber particles were mixed at a weight ratio of 94/6, and the mixture was kneaded at a temperature of 230 to 250°C using a twin screw extruder to form pellets. The pellets were used to obtain a filament with a diameter of 1.75 mm using the same procedure as in Example 1. The physical properties of the filament obtained and the results of the formability evaluation are shown in Table 1.

### [Example 4]

The styrene-based resin (A2) and the ABS resin (B1) were mixed at a weight ratio of 60/40, and the mixture was kneaded at a temperature of 230 to 250°C using a twin screw extruder to form pellets. The pellets were used to obtain a filament with a diameter of 1.75 mm using the same procedure as in Example 1. The physical properties of the filament obtained and the results of the formability evaluation are shown in Table 1.

### [Example 5]

The styrene-based resin (A1) was used for a sheath layer, and the ABS resin (B1) was used as a core layer. These materials were co-extruded at a fusing temperature of 230 to 250°C such that the sheath layer covered the core layer and the ratio of the diameter of the filament to the diameter of the core layer was 2:1, and the extruded product was cooled in cooling water at 70°C to thereby obtain a filament with a diameter of 1.75 mm. The physical properties of the filament obtained and the results of the formability evaluation are shown in Table 1.

### [Example 6]

The same procedure as in Example 5 was repeated except that the ABS resin (B1) was used as the sheath layer and the styrene-based resin (A1) was used as the core layer, and a filament with a diameter of 1.75 mm was thereby obtained. The physical properties of the filament obtained and the results of the formability evaluation are shown in Table 1.

### [Example 7]

The ABS resin (B2) and the PBS resin were mixed at a weight ratio of 80/20, and the mixture was kneaded at a temperature of 230 to 250°C using a twin screw extruder to form pellets. The pellets were used to obtain a filament with a diameter of 1.75 mm using the same procedure as in Example 1. The physical properties of the filament obtained and the results of the formability evaluation are shown in Table 1.

### [Example 8]

The ABS resin (B2) and the PETG resin were mixed at a weight ratio of 60/40, and the mixture was kneaded at a temperature of 230 to 250°C using a twin screw extruder to form pellets. The pellets were used to obtain a filament with a diameter of 1.75 mm using the same procedure as in Example 1. The physical properties of the filament obtained and the results of the formability evaluation are shown in Table 1.

### [Comparative Example 1]

The ABS resin (B2) was used, and the same procedure as in Example 1 was repeated to obtain a filament with a diameter of 1.75 mm. The physical properties of the filament obtained and the results of the formability evaluation are shown in Table 1. This filament was solid at 100°C, and the G'100°C could not be measured.

**[Table 1]**

| | | Example 1 | Example 2 | Example 3 | Example 4 | Example 5 | Example 6 | Example 7 | Example 8 | Comparative Example 1 |
|---|---|---|---|---|---|---|---|---|---|---|
| Structure | Core | Styrene-based resin (A1) | Styrene-based resin (A2) | Styrene-based resin (A1) + rubber particles | Styrene-based resin (A2) +ABS resin (B1) | ABS resin (B1) | Styrene-based resin (A1) | ABS resin (B2) + PBS resin | ABS-based resin (B2) + PETG resin | ABS resin (B2) |
| | Sheath | | | | | Styrene-based resin (A1) | ABS resin (B1) | | | |
| Physical properties of filament | Tg (°C) | 86 | 84 | 86 | 84, 104 | 86, 104 | 86, 104 | 76 | 78, 104 | 104 |
| | MI (g/10 min) | 70 | 37 | 59 | 63 | 70 | 70 | 60 | 22 | 29 |
| | E'100°C (MPa) | 60 | 38 | 53 | 219 | 790 | 797 | 3 | 496 | 1233 |
| | E'30°C (MPa) | 2075 | 1779 | 1851 | 1895 | 2120 | 2132 | 2370 | 1970 | 1655 |
| | G'100°C (× 10⁶ Pa) | 0.7 | 0.6 | 1.0 | 4.8 | 4.9 | 4.9 | 0.3 | 6.4 | >11.3 |
| Evaluation | Warpage | Good | Good | Good | Good | Good | Good | Good | Good | Poor |
| | High-speed formability | Good | Poor | Good | Good | Good | Good | Good | Poor | Poor |
| | Heat resistance during modeling | Poor | Poor | Good | Good | Good | Good | Poor | Good | Good |
| | Z-axis strength | Good | Good | Good | Poor | Poor | Poor | Good | Poor | Good |

The following can be seen from Table 1.

The three-dimensional modeling materials in Examples 1 to 8 each have a Tg within the range of 50°C or higher and lower than 100°C, and therefore the occurrence of warpage is prevented.

In Examples 1 and 3 to 7, since the MI is within the preferred range of the present invention, the high-speed formability is good.

In Examples 3 to 6, since the rubber particles or a component with a Tg of 100°C or higher is contained, heat resistance is high, and deformation caused by softening during modeling is prevented.

In Examples 4 to 6 and 8, since the compatibility between the resins used is low, the Z-axis strength is low. However, in Example 7, since the compatibility between the resins used is high, the Z-axis strength is high.

Although the present invention has been described in detail by way of the specific modes, it is apparent for those skilled in the art that various changes can be made without departing from the spirit and scope of the present invention.

The present application is based on Japanese Patent Application No. 2018-017466 filed on February 2, 2018, the entire contents of which are incorporated herein by reference.

### Reference Signs List

- 1: styrene-based resin (A)
- 2: styrene-based resin (B)
- 3: shaped object

## Claims

1. A three-dimensional modeling material containing a styrene-based resin and used for a fused deposition modeling three-dimensional printer, wherein the three-dimensional modeling material has at least one glass transition temperature (Tg) in the range of 50°C or higher and lower than 100°C.

2. The three-dimensional modeling material according to claim 1, wherein a melt index (MI) of the material measured at 220°C and 10 kg is 30 or more and less than 100.

3. The three-dimensional modeling material according to claim 1 or 2, wherein the styrene-based resin includes a styrene-based resin (A) that has a glass transition temperature (Tg) only in the range of lower than 100°C.

4. The three-dimensional modeling material according to claim 3, wherein the styrene-based resin (A) contains a structural unit derived from a (meth)acrylate.

5. The three-dimensional modeling material according to claim 4, wherein the structural unit derived from the (meth)acrylate is a structural unit derived from at least one selected from the group consisting of acrylates in which a hydrocarbon group derived from an alcohol has 1 to 20 carbon atoms and methacrylates in which a hydrocarbon group derived from an alcohol has 2 to 20 carbon atoms.

6. The three-dimensional modeling material according to any one of claims 1 to 5, wherein the styrene-based resin includes a styrene-based resin (B) having a glass transition temperature (Tg) of 100°C or higher.

7. The three-dimensional modeling material according to any one of claims 3 to 5, wherein the styrene-based resin includes the styrene-based resin (A) and a styrene-based resin (B) having a glass transition temperature (Tg) of 100°C or higher; and the styrene-based resin has a multilayer structure including the styrene-based resin (A) and the styrene-based resin (B) in respective different layers.

8. The three-dimensional modeling material according to claim 7, wherein at least part of the surface of the three-dimensional modeling material is the layer containing the styrene-based resin (A).

9. A three-dimensional modeling filament comprising the three-dimensional modeling material according to any one of claims 1 to 8, wherein the filament has a diameter of 1.0 to 5.0 mm.

10. The three-dimensional modeling filament according to claim 9, wherein a tensile storage elastic modulus (E') of the filament measured at 100°C and 10 Hz is 1000 MPa or less.

11. The three-dimensional modeling filament according to claim 9 or 10, wherein a shear storage elastic modulus (G') of the filament measured at 100°C and 1 Hz is 1×10⁶ Pa or more.

12. A roll of the three-dimensional modeling filament according to any one of claims 9 to 11.

13. A cartridge for a three-dimensional printer, comprising the three-dimensional modeling filament according to any one of claims 9 to 11 and a container that houses the three-dimensional modeling filament.

14. A three-dimensional modeling method comprising performing modeling using the three-dimensional modeling material according to any one of claims 1 to 8 or the three-dimensional modeling filament according to any one of claims 9 to 11 and a three-dimensional printer comprising a substrate, wherein a temperature of the substrate is maintained as below:
10°C ≤ the substrate temperature < 100°C.
